# EUROPEAN PATENT SPECIFICATION

(11) **EP 4 500 887 B1**
(45) Date of publication and mention of the grant of the patent: **06.05.2026**
(21) Application number: 23707721.9
(22) Date of filing: 27.02.2023
(51) Int. Cl.: H04Q 11/00

(54) **IMPROVING THE ENERGY EFFICIENCY OF OPTICAL NETWORKS**
VERBESSERUNG DER ENERGIEEFFIZIENZ VON OPTISCHEN NETZWERKEN
AMÉLIORATION DU RENDEMENT ÉNERGÉTIQUE DE RÉSEAUX OPTIQUES

(30) Priority: 24.03.2022 GB 202204184
(43) Date of publication of application: 05.02.2025
(73) Proprietor: British Telecommunications public limited company, London, Greater London E1 8EE (GB)
(72) Inventor: HORSLEY, Ian, London Greater London E1 8EE (GB)
(74) Representative: British Telecommunications public limited company Intellectual Property Department
(86) International application number: PCT/EP2023/054796
(87) International publication number: WO 2023/180012

(56) References cited:
- WO-A1-2021/103344
- CN-A- 106 160 918
- JINGJING ZHANG ET AL: "Designing energy-efficient optical line terminal for TDM passive optical networks", SARNOFF SYMPOSIUM, 2011 34TH IEEE, IEEE, 3 May 2011 (2011-05-03), pages 1 - 5, XP031993481, ISBN: 978-1-61284-681-1, DOI: 10.1109/SARNOF.2011.5876436
- PULAK CHOWDHURY ET AL: "Building a Green Wireless-Optical Broadband Access Network (WOBAN)", JOURNAL OF LIGHTWAVE TECHNOLOGY, IEEE, USA, vol. 27, no. 16, 15 August 2010 (2010-08-15), pages 2219 - 2229, XP011304091, ISSN: 0733-8724

## Description

### Field

The present disclosure relates to improving the energy efficiency of optical networks.

More specifically, aspects relate to optical networks, methods of operating such optical networks, data processing systems configured to perform such methods, computer programs comprising instructions which, when the program is executed by a computer, cause the computer to carry out such methods, computer-readable data carriers having stored such computer programs thereon and data carrier signals carrying such computer programs.

### Background

WO 2021/103344 A1, CN 106 160 918 A, Jingjing Zhang et al: "Designing energy-efficient optical line terminal for TDM passive optical networks", Sarnoff Symposium, 2011 34th IEEE, and Pulak Chowdhury et al: "Building a Green Wireless-Optical Broadband Access Network (WOBAN)", Journal of Lightwave Technology, IEEE, USA, vol. 27, no. 16 all disclose background art.

Passive optical networks (PONs), otherwise known as the 'last mile' between internet service providers (ISPs) and subscribers, communicate data between exchanges (otherwise known as the service provider's central office (CO) or point of presence (PoP)) and end users over optical fibres. The term 'downstream' will be used herein to refer to the direction from the exchange to a subscriber device, and 'upstream' from the subscriber device to the exchange. Each PON comprises an optical line terminal (OLT) at the exchange and one or more optical network units (ONUs) or optical network terminals (ONTs) at customer premises. The International Telecommunication Union (ITU) defines an ONT as a special case of an ONU; an ONT being an optical terminal that serves a single subscriber, while an ONU is an optical terminal that serves one or more subscribers, for example in a residential or office block. The generic term ONU will be used in this document. Generally, a single optical fibre couples the OLT to a passive optical splitter, which has multiple output fibres. Each ONU is coupled to the splitter by one of those output fibres.

Data can be transmitted bidirectionally over the PON by using one wavelength of light for downstream transmissions from the OLT, via the splitter, to the ONUs and another wavelength of light for upstream transmissions from the ONUs, via the splitter, to the OLT. When discussing inputs and outputs to splitters in this document, these terms are to be understood as referring to light traversing the splitter in the downstream direction. Accordingly, upstream light traversing a splitter enters the splitter through one of its 'outputs' and exits the splitter through one of its 'inputs'.

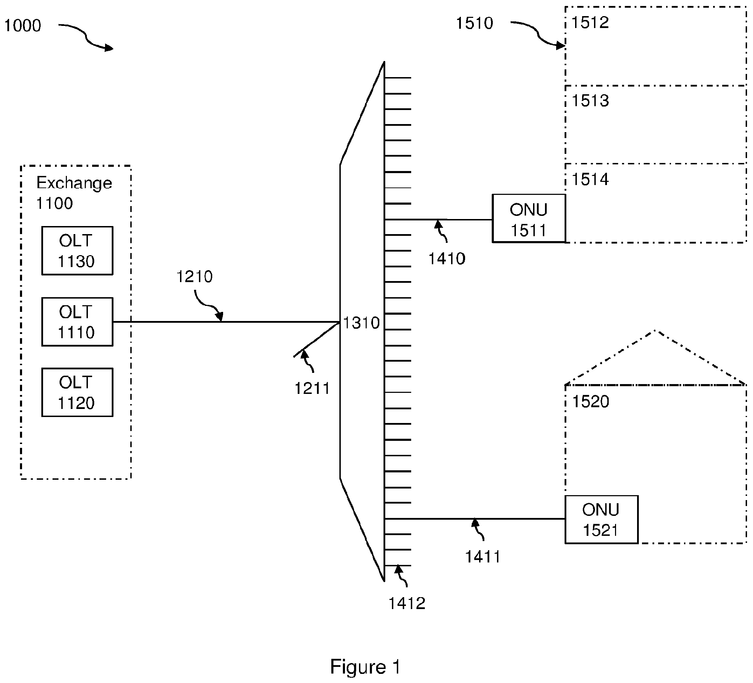

Figure 1 illustrates the abovementioned features in an example optical network 1000. An exchange 1100 houses several OLTs 1110, 1120, 1130. Each of those OLTs is the upstream-most point of one or more PONs, but only one PON is shown, extending via a 'feeder' or 'spine' fibre 1210 from the OLT 1110 to a 2 x 32 splitter 1310. (2 x 32 is currently the most commonly used splitter in the UK, though PON technologies can also support 64- and 128-way splits. Higher split ratios reduce reach since downstream optical power is split between the splitter outputs.) The splitter 1310 has 32 outputs including output fibres 1410 and 1411 which are in use. Output fibre 1410 is routed to an office block 1510 which has an ONU 1511 coupled to the output fibre 1410. The office block 1510 houses three subscriber business premises 1512, 1513 and 1514, each of which is served by the ONU 1511 via either an optical or electrical connection (not shown). The output fibre 1411 is routed to a house 1520 where it is coupled to an ONU 1521.

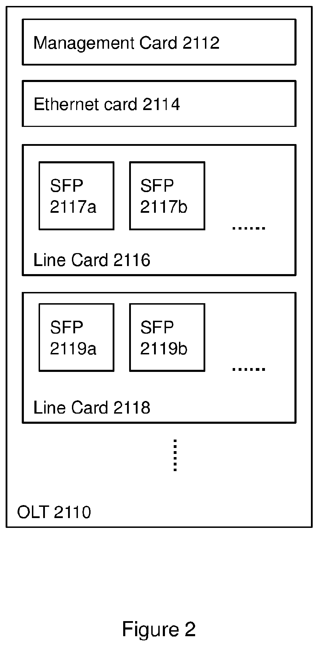

Figure 2 illustrates an example chassis based OLT 2110, which could for example correspond to the OLT 1110 of Figure 1. The OLT 2110 comprises a management card 2112, an ethernet card 2114 used for backhaul or point-to-point (PTP) services and a plurality of line cards 2116, 2118 etc. Each line card 2116, 2118 comprises one or more medium access control (MAC) chips (not shown). A first line card 2116 comprises a plurality of small form factor pluggable transceivers (SFPs) 2117a, 2117b etc. which comprise PON optics. Similarly, a second line card 2118 comprises a plurality of SFPs 2119a, 2119b etc. which comprise PON optics. One SFP typically provides one PON's connection to the OLT, though multi-transceiver SFP+s capable of connecting multiple PONs are available. Each PON is supported by a MAC chip, though not necessarily in a one-to-one relationship (i.e. a single MAC chip can support multiple PONs). Leaf/spine-based OLTs are sometimes deployed as an alternative to chassis-based OLTs. In leaf/spine-based OLTs leaf switches perform a similar role to the line cards of chassis-based OLTs. Both will be referred to herein generically as 'OLT subunits'.

The way in which PONs use a wavelength or power splitter in the distribution network to allow multiple premises to be served by one spine fibre (1210 in the example of Figure 1) and OLT (1110) in the exchange (1100) reduces the headend cost and power consumption per end user relative to PTP networks. The downside, over PTP, is that the bandwidth is shared between multiple end users and additional latency and jitter may be introduced. As a result, there is a trade-off between restricted bandwidth, increased latency and jitter impact on the one hand and cost of deployment and power usage on the other. There are typically large differences in traffic demands between busy periods, typically 4 to 8pm on residential deployments, and the rest of the day. The trade-off decision is typically made based on demand during the busy hours to reduce the risk of end users having their quality of service noticeably degraded.

One way of reducing power consumption is to make use of ONU sleep modes, which shut down the PON related parts including optics, serialiser/deserialiser (SERDES), MAC and packet processing when no traffic has to be transmitted. These modes can save up to 30% of an ONU's power consumption, however they introduce jitter as traffic has to be buffered while the ONU is in the sleep mode. If similar sleep modes were used to save power in the OLT they would introduce jitter for all ONUs served by the OLT and could only be entered when all ONUs served by the OLT have low traffic demands or are inactive.

What is needed is a way of reducing power consumption in optical networks which at least partially mitigates the problems associated with existing PON deployments and sleep modes discussed above.

### Summary

Aspects of the invention are set out in the appended claims.

### Brief description of the figures

Aspects of the present disclosure will now be described by way of example with reference to the accompanying figures. In the figures:
Figure 1 schematically illustrates an example optical network;
Figure 2 schematically illustrates an example chassis based optical line terminal (OLT);
Figure 3 schematically illustrates an example network topology;
Figure 4 schematically illustrates another example network topology;
Figure 5 schematically illustrates another example optical network;
Figure 6 is a flowchart illustrating an example method of operating the example optical network of Figure 5;
Figure 7 is a flowchart illustrating an example method which can follow the example method of Figure 6;
Figure 8 is a flowchart illustrating an example method which can follow the example method of Figure 7;
Figure 9 is a flowchart illustrating an example method which can follow the example method of Figure 8;
Figure 10A illustrates steps which can be incorporated into the example method of Figure 6 in an example implementation;
Figure 10B illustrates further steps which can be incorporated into the example method of Figure 6 in that example implementation;
Figure 11A illustrates steps which can be incorporated into the example method of Figure 6 in another example implementation;
Figure 11B illustrates further steps which can be incorporated into the example method of Figure 6 in that example implementation;
Figure 12 schematically illustrates another example network topology;
Figure 13 illustrates another example method;
Figure 14 illustrates an example method which can follow the example method of Figure 13;
Figure 15 illustrates an example method which can follow the example method of Figure 14;
Figure 16 illustrates an example method which can follow the example method of Figure 15; and
Figure 17 schematically illustrates an example data processing system.

### Detailed description of the figures

The following description is presented to enable any person skilled in the art to make and use the system and/or perform the method of the invention, and is provided in the context of a particular application. Various modifications to the disclosed embodiments will be readily apparent to those skilled in the art.

A method is proposed of saving power in an optical network by sharing exchange apparatus between more PONs than usual during low traffic demand periods. During high traffic demand periods the conventional network configuration described above is used, in which each of a plurality of sets of ONUs is served by a respective one of a commensurate plurality of exchange apparatuses, wherein the term 'exchange apparatus' as used herein can for example refer to an SFP, SFP+, OLT subunit (i.e. line card or leaf switch) or OLT, such that:
- if the 'exchange apparatuses' are transceivers in multi-transceiver SFP+s then each 'set of ONUs' is the set of ONUs served by a single PON;
- if the 'exchange apparatuses' are SFPs then each 'set of ONUs' consists of all the ONUs served by all the PONs connected to that SFP (a single PON in the case of a conventional single transceiver SFP, one or more PONs in the case of a multi-transceiver SFP+);
- if the 'exchange apparatuses' are OLT subunits then each 'set of ONUs' consists of all the ONUs served by all the PONs connected to that OLT subunit; and
- if the 'exchange apparatuses' are OLTs then each 'set of ONUs' consists of all the ONUs served by all the PONs connected to that OLT.

During low traffic demand periods however, one or more exchange apparatuses are powered down, with its/their traffic being re-routed via another exchange apparatus in the same or another (preferably nearby) exchange. In this way, exchange power consumption is reduced during periods when there will be little or no impact on quality of service.

For example, if all of the SFPs on two OLT subunits are paired together, an entire OLT subunit can be powered down in low traffic demand periods, introducing further power savings relative to only some of the SFPs being paired. Similarly, if all of the OLT subunits on two OLTs are paired together, then an entire OLT can be powered down during low traffic demand periods, introducing further power savings relative to only some of the OLT subunits being paired.

The sets of ONUs paired together during the low traffic demand periods can be chosen at random or according to one or both of physical and service-related constraints.

Physical constraints for example include relative locations of the components; e.g. if the SFP 2117a of the OLT 2110 of Figure 2 is to be powered down during low traffic demand periods then it may be preferable for those ONUs it serves during high traffic demand periods to be served by either the adjacent SFP 2117b of the same line card 2116, or by the corresponding SFP 2119a of the adjacent line card 2118. (If the SFP 2117a is paired with the SFP 2117b then the SFP 2119a can be paired with the SFP 2119b. Alternatively, is the SFP 2117a is paired with the SFP 2119a then the SFP 2117b can be paired with the SFP 2119b.) These pairings reduce the risk of connecting fibres having to be crossed or bent excessively relative to a pairing of the SFP 2117a with the SFP 2119b, or with another SFP not shown in Figure 2.

Service-related constraints may be imposed by the terms of service level agreements (SLAs) made between network service providers, ISPs and subscribers. For example, a set of ONUs comprising an ONU of a subscriber who has paid for a premium service may be excluded from pairing. Alternatively or additionally, service-related constraints can be imposed by typical subscriber usage on a particular network. For example, a set of ONUs whose total aggregate or peak network usage exceeds a predetermined ONU set usage threshold, or which comprises a particular ONU whose aggregate or peak network usage exceeds a predetermined ONU usage threshold, may be excluded from pairing. (In either case the usage could for example be averaged over a preceding period such as one week or one month.) Alternatively or additionally, ONU sets could be selected for pairing starting with those having the lowest typical usages, with pairing only extended to other ONU sets if necessary to meet a power reduction requirement. Pairing can be arranged to minimise service impact by pairing ONU sets with relatively high typical usage with ONU sets with relatively low typical usage, for example such that the sum of typical usage on each pair does not exceed a pair usage threshold.

While many of the implementations described herein involve pairing of two sets of ONUs to share an exchange apparatus during low traffic demand periods, more than two (e.g. three or four) sets of ONUs could be grouped together for further power savings.

The condition(s) for switching between configurations can be set to limit the number of switches, and thus associated jitter impact, for example to only two switches per day (e.g. switching from the first to the second configuration at 8pm then switching back to the first configuration at 4pm of the following calendar day).

The second, low power, configuration can potentially be used for the majority of each day (e.g. 20 hours from 8pm of one calendar day to 4pm of the next). In contrast, if exchange apparatus sleep modes, similar to known ONU sleep modes, were to be implemented they could only be used when all of the ONUs served by the exchange apparatus have low traffic demands or are inactive, which is likely to be a much shorter period (e.g. 6 hours from midnight to 6am).

The re-routing can for example make use of the redundancy-free PON protection topology described in applicant's granted UK patent number 2588112. This protection topology involves cascading splitters, which makes efficient use of existing network components, but introduces losses which in some circumstances may require the use of more powerful optics.

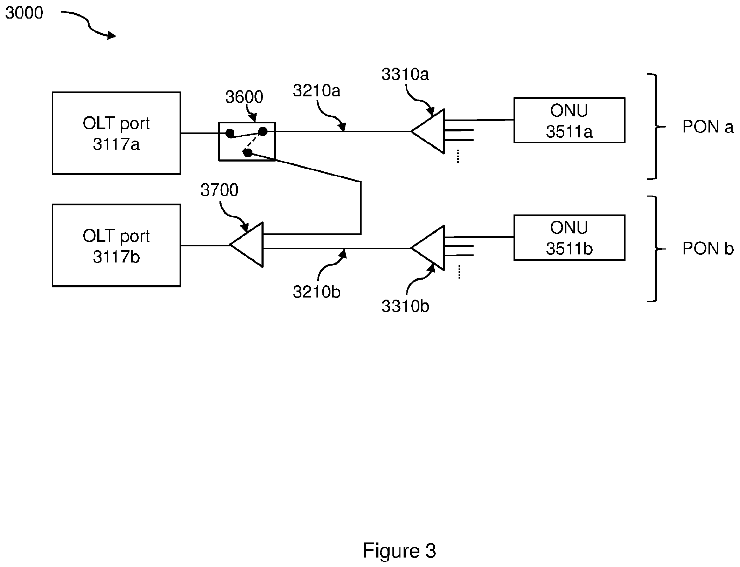

An alternative example network topology which could be implemented by adding a few small components to a conventional network, without requiring any upgrade of the optics, is schematically illustrated in Figure 3. An optical network 3000 comprises two PONs, PON a and PON b. In the conventional configuration shown, PON a is served by an OLT port 3117a which is connected to a splitter 3310a by a spine fibre 3210a. The splitter 3310a serves a set of ONUs comprising an ONU 3511a. Similarly, PON b is served by an OLT port 3117b which is connected to a splitter 3310b by a spine fibre 3210b. The splitter 3310b serves a set of ONUs comprising an ONU 3511b. In addition to the conventional components, a multi-way optical switch 3600 is provided between the OLT port 3117a and the spine fibre 3210a and a splitter 3700 is provided between the OLT port 3117b and the spine fibre 3210b. The multi-way optical switch 3600 can be set in an alternative configuration, as indicated by the dashed line. With the network 3000 in the alternative configuration the OLT port 3117a is disconnected from the spine fibre 3210a. The spine fibre 3210a is instead connected, through the splitter 3700, to the OLT port 3117b. In this way the sets of ONUs served by both the splitter 3310a and the splitter 3310b, including the ONU 3511a and the ONU 3511b, can all be served by the OLT port 3117b.

During relatively high traffic demand periods, the conventional configuration is used. During relatively low traffic demand periods, the alternative configuration is used and the OLT port 3117a, corresponding SFP and associated PON chipset in the PON line card are powered down so that they do not consume power.

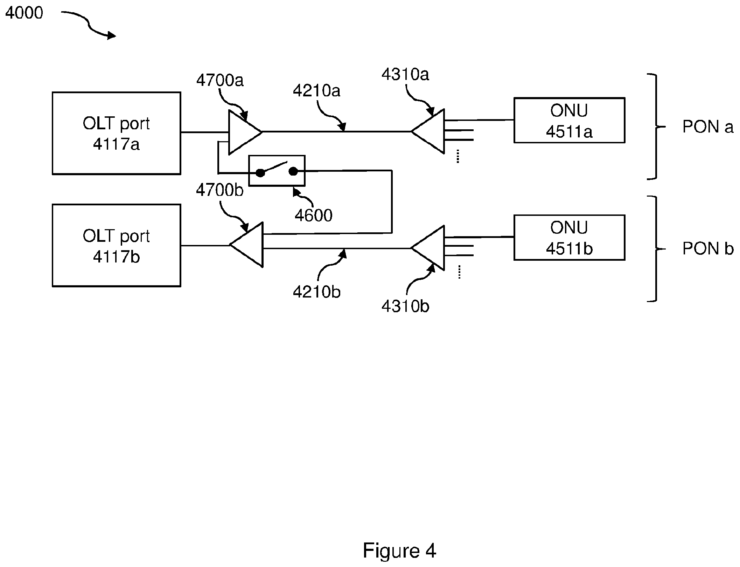

Figure 4 schematically illustrates an alternative example network topology 4000 similar to that of Figure 3, wherein reference numerals of corresponding components are incremented by 1000. In this example, an additional splitter 4700a is connected between the OLT port 4117a and the spine fibre 4210a. Instead of the multi-way optical switch 3600 of Figure 3, which can form two alternative connections, a single-way optical switch 4600, which can make or break a single connection, is provided to (dis)connect the additional splitter 4700a from the splitter 4700b. The network 4000 operates in a conventional way when the switch 4600 is open, during relatively high traffic demand periods. When the switch 4600 is closed, during relatively low traffic demand periods, the OLT port 4117a is powered down and the sets of ONUs served by both the splitter 4310a and the splitter 4310b, including the ONU 4511a and the ONU 4511b, are all served by the OLT port 4117b.

In each of the networks 3000 and 4000, re-ranging on switching between configurations can be avoided by ensuring that the optical length of the connection between the OLT port 3117a, 4117a and the switch 3600, 4600 matches the length of the connection between the OLT port 3117b, 4117b and the switch 3600, 4600.

While Figures 3 and 4 show switching apparatus located between OLT ports and spine fibres, if transceivers within a multi-transceiver SFP+ are to be paired together then the switching apparatus could be provided within the SFP+.

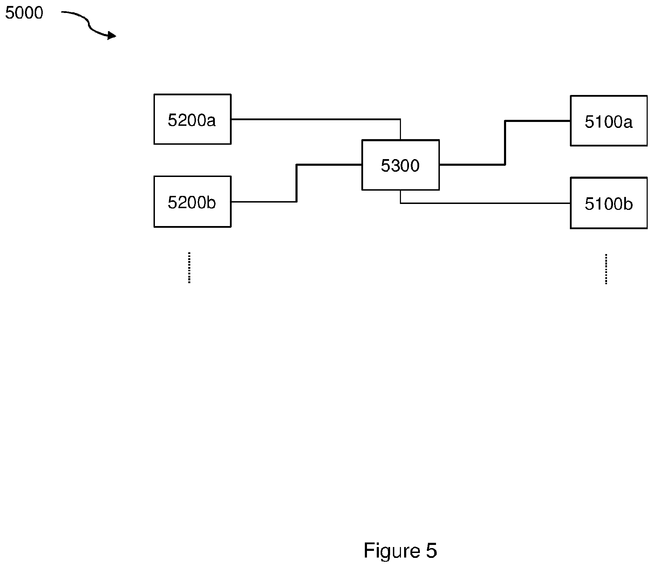

The optical networks 3000 and 4000 illustrated in Figures 3 and 4 respectively are specific examples of networks in which the methods proposed herein could be implemented. Figure 5 schematically illustrates a more generic optical network 5000 which comprises a plurality of sets 5100 of ONUs, and a commensurate plurality of exchange apparatuses 5200. It is reversibly switchable between first and second configurations using switching apparatus 5300.

In the first configuration, each of the sets 5100 of ONUs is optically coupled to a respective first exchange apparatus 5200 of the plurality of exchange apparatuses, such that each of the exchange apparatuses 5200 is optically coupled to only one of the sets 5100 of ONUs. That is, the only ONU set of the plurality of ONU sets 5100 to which an exchange apparatus 5200a is optically coupled is an ONU set 5100a and the only ONU set of the plurality of ONU sets 5100 to which an exchange apparatus 5200b is optically coupled is an ONU set 5100b, etc. The term 'optically coupled' is used herein in the sense that two components of an optical network are optically coupled to one another if the physical configuration of the optical network is such that optical communication between them is possible. In contrast, if they are optically uncoupled from one another then the physical configuration of the optical network is such that optical communication between them is not possible.

In the second configuration, one or some of the ONU sets 5100, which will be referred to herein as 'the second configuration transfer ONU sets', are optically uncoupled from their respective first exchange apparatuses and optically coupled to a respective second exchange apparatus of the plurality of exchange apparatuses 5200, such that those second one or more exchange apparatuses 5200 are each optically coupled to two or more of the sets 5100 of ONUs. For example, the ONU set 5100a may be a second configuration transfer ONU set which, in the second configuration, is optically uncoupled from the exchange apparatus 5200a and optically coupled to the exchange apparatus 5200b, such that the exchange apparatus 5200b is optically coupled to both the ONU set 5100b and the ONU set 5100a, while the exchange apparatus 5200a is optically uncoupled from both the ONU set 5100a and the ONU set 5100b, and can thus be powered down.

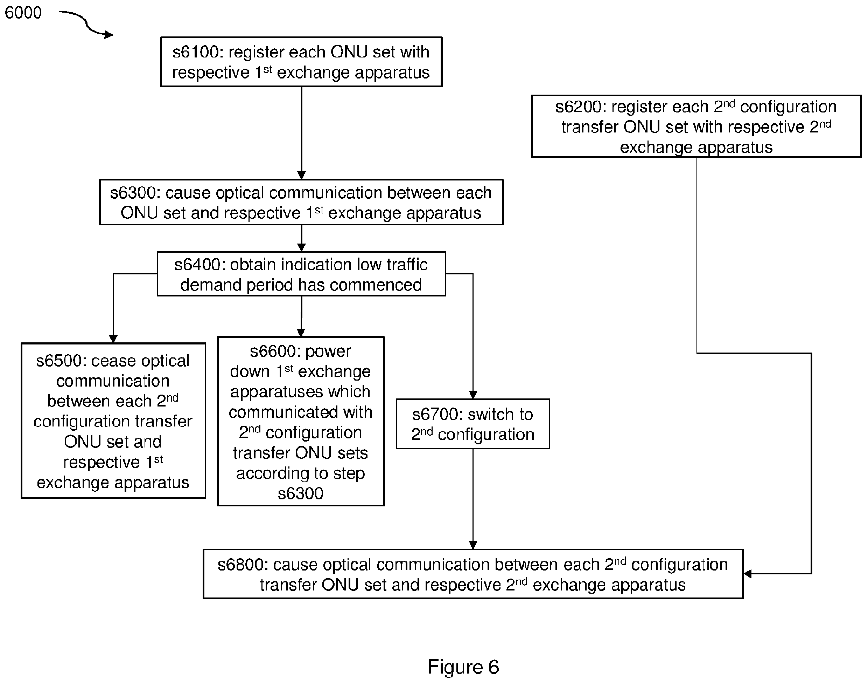

Figure 6 is a flowchart illustrating a method 6000 of operating the optical network 5000 of Figure 5. At step s6100, each of the ONU sets 5100 is registered with their respective first exchange apparatuses 5200. At step s6200, each of the second configuration transfer ONU sets (e.g. 5100a) is registered with their respective second exchange apparatuses (e.g. 5200b). At step s6300, with the optical network 5000 in the first configuration, optical communication is caused between each of the ONU sets 5100 and their respective first exchange apparatuses 5200. Subsequently, at step s6400, an indication that a period of low traffic demand on the optical network 5000 has commenced is obtained. Several steps are performed in response to step s6400, as follows.
- At step s6500, the optical communication between each of the second configuration transfer ONU sets (e.g. 5100a) and their respective first exchange apparatuses (e.g. 5200a) is ceased.
- At step s6600, those one or more first exchange apparatuses (e.g. 5200a) are powered down.
- At step s6700, the optical network is switched to the second configuration.
- In response to step s6700, optical communication is caused between each of the second configuration transfer ONU sets (e.g. 5100a) and their respective second exchange apparatuses (e.g. 5200b) at step s6800.

Step s6100 must precede step s6300. Step s6200 must precede step s6800. Step 6400 must occur after step 6300 has commenced. Step s6800 must follow step s6700. Steps s6500, s6600 and s6700 must all follow step s6400. Otherwise, the steps of the method 6000 can be performed in any order in relation to one another, in series, or partially or wholly in parallel.

Step s6400 can comprise the entity performing the method making a determination itself, or receiving an indication from another entity which has made such a determination, that the low traffic demand period has commenced.

The determination that the low traffic demand period has commenced can for example be based on a predetermined time window commencing, e.g. 8pm to 4pm. The predetermined time window could for example be determined in advance, by the entity performing the method 6000 or another entity, based on historical traffic data for the optical network 5000 and/or one or more other, comparable, networks. The predetermined time window could be updated on an ongoing basis, based on recent traffic data.

Alternatively or additionally, the determination that the low traffic demand period has commenced can for example be based on traffic on the optical network falling below a threshold traffic level, or remaining below a threshold traffic level for a threshold quiet duration. Such a determination can for example be based on traffic monitoring performed by the entity performing the method 6000, or by another entity.

Alternatively or additionally, the determination that the low traffic demand period has commenced can for example be based on a threshold proportion of ONUs being inactive, or having been inactive for a threshold inactivity duration, or having been optically decoupled from their respective first exchange apparatuses (e.g. because a subscriber has unplugged their ONU). The proportion could for example be of either:
i) the second configuration transfer ONU sets;
ii) the one or more sets of ONUs whose respective first exchange apparatuses act as respective second exchange apparatuses for the second configuration transfer ONU sets; or
iii) the full plurality of sets of ONUs.

The ways of determining that the low traffic demand period has commenced described above can be combined in various ways in order to ensure switching between configurations is performed at the most appropriate time. For example, switching could usually be triggered in response to a predetermined time window commencing, but this could be overridden by traffic levels being at or above a predetermined threshold.

If step s6500 of ceasing the optical communication precedes step s6600 of powering down the one or more first exchange apparatuses, then step s6500 can trigger queueing of messages received at the exchange for the second configuration transfer ONU sets until the optical network has been switched to the second configuration. In this way, packet loss during the switch can be reduced or prevented.

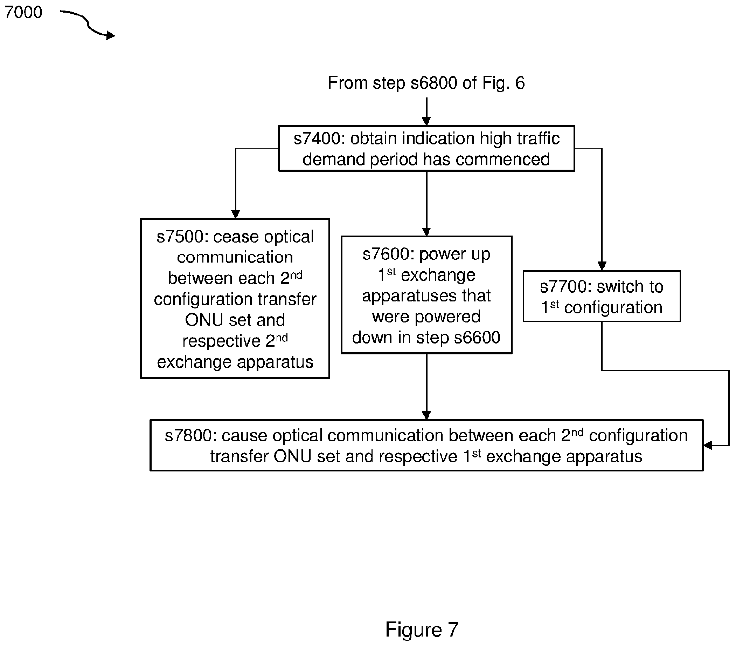

Figure 7 is a flowchart of an example method 7000 which can follow the method 6000 of Figure 6. At step s7400, an indication that a period of high traffic demand on the optical network 5000 has commenced is obtained. Several steps are performed in response to step s7400, as follows.
- At step s7500, the optical communication between each of the second configuration transfer ONU sets (e.g. 5100a) and their respective second exchange apparatuses (e.g. 5200b) is ceased.
- At step s7600, the one or more first exchange apparatuses (e.g. 5200a) that were powered down in step s6600 are powered up.
- At step s7700, the optical network is switched back to the first configuration.
- In response to step s7700, optical communication is caused between each of the second configuration transfer ONU sets (e.g. 5100a) and their respective first exchange apparatuses (e.g. 5200a) at step s7800.

Step s7800 must follow steps s7600 and s7700. Steps s7500, s7600 and s7700 must all follow step s7400. Otherwise, the steps of the method 7000 can be performed in any order in relation to one another, in series, or partially or wholly in parallel.

Step s7400 can comprise the entity performing the method making a determination itself, or receiving an indication from another entity which has made such a determination, that the high traffic demand period has commenced.

The determination that the high traffic demand period has commenced can for example be based on a predetermined time window commencing, e.g. 4 to 8pm. The predetermined time window could for example be determined in advance, by the entity performing the method 7000 or another entity, based on historical traffic data for the optical network 5000 and/or one or more other, comparable, networks. The predetermined time window could be updated on an ongoing basis, based on recent traffic data.

Alternatively or additionally, the determination that the high traffic demand period has commenced can for example be based on traffic on the optical network rising to reach a threshold traffic level, or remaining at or above a threshold traffic level for a threshold busy duration. Such a determination can for example be based on traffic monitoring performed by the entity performing the method 7000, or by another entity.

Alternatively or additionally, the determination that the high traffic demand period has commenced can for example be based on a threshold proportion of ONUs being active, or having been active for a threshold activity duration, or having been optically coupled to their respective second exchange apparatuses (e.g. because a subscriber has plugged their ONU back in after a period in which it had been unplugged). The proportion could for example be of either:
i) the second configuration transfer ONU sets;
ii) the one or more sets of ONUs whose respective first exchange apparatuses act as respective second exchange apparatuses for the second configuration transfer ONU sets; or
iii) the full plurality of sets of ONUs.

The ways of determining that the high traffic demand period has commenced described above can be combined in various ways in order to ensure switching between configurations is performed at the most appropriate time. For example, switching could generally be triggered in response to a predetermined time window commencing, but this could be overridden by traffic levels being below a predetermined threshold.

If step s7500 of ceasing the optical communication precedes step s7600 of powering up the one or more first exchange apparatuses, then step s7500 can trigger queueing of messages received at the exchange for the second configuration transfer ONU sets until the optical network has been switched back to the first configuration. In this way, packet loss during the switch can be reduced or prevented.

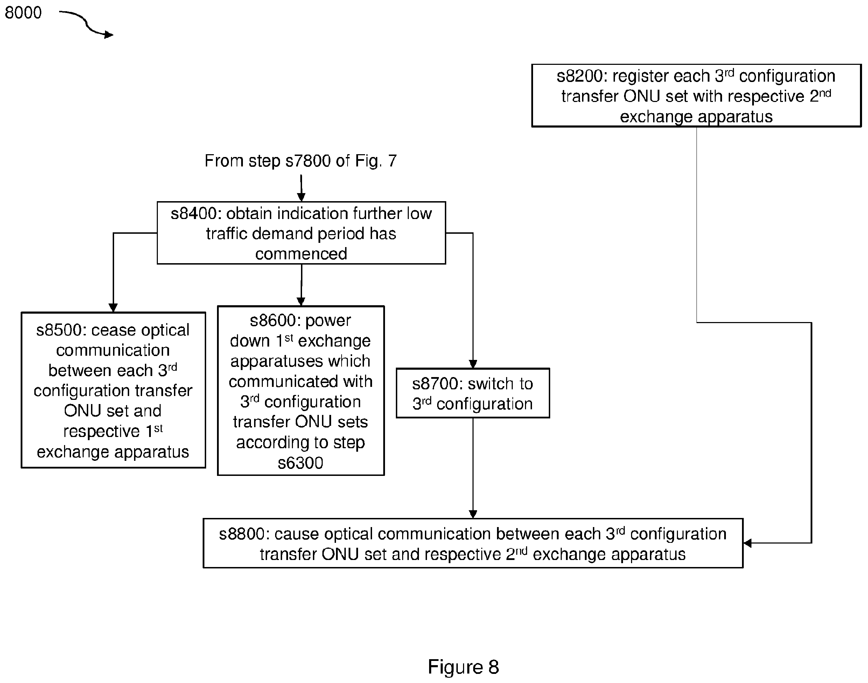

Queueing or buffering messages received at the exchange for the second configuration transfer ONU sets during one or both of the switches between configurations described above in relation to Figures 6 and 7 may cause some jitter. In order to spread the jitter impact more fairly between all the ONUs, which of the exchange apparatuses are powered down can be varied between consecutive low-traffic periods. (The switching apparatus 5300 must be suitably configured to permit this; for example a configuration similar to that shown in Figure 3 or Figure 4 could be used, but with additional switches and splitters which mirror the non-conventional components shown.) This can for example be done by alternating between members of pairs or according to a cyclical or randomised schedule. Alternatively, which exchange apparatus is powered down during each low-traffic period could depend on how many active ONUs are served by each exchange apparatus during high-traffic periods (e.g. exchange apparatuses serving fewer ONUs in high-traffic periods may be selected to be powered down in low-traffic periods more often than exchange apparatuses serving more ONUs in high-traffic periods). Figure 8 is a flowchart of an example method 8000 which can follow the method 7000 of Figure 7 in order to achieve such a distribution of jitter impact.

According to the method 8000, the optical network is further reversibly switchable between the first configuration and a third configuration. In the third configuration, one or some of the ONU sets 5100, which will be referred to herein as 'the third configuration transfer ONU sets', are optically uncoupled from their respective first exchange apparatuses and optically coupled to a respective second exchange apparatus of the plurality of exchange apparatuses 5200, such that those second one or more exchange apparatuses 5200 are each optically coupled to two or more of the sets 5100 of ONUs.

At step s8200, each of the third configuration transfer ONU sets is registered with their respective second exchange apparatuses. At step s8400, which occurs after step s7800 of Figure 7 has commenced, an indication that a further period of low traffic demand on the optical network 5000 has commenced is obtained. (This can comprise making a determination, or receiving an indication, based on one or more criteria as described above in relation to step s6400 of Figure 6.) Several steps are performed in response to step s8400, as follows.
- At step s8500, the optical communication between each of the third configuration transfer ONU sets and their respective first exchange apparatuses is ceased.
- At step s8600, those one or more first exchange apparatuses are powered down.
- At step s8700, the optical network is switched to the third configuration.
- In response to step s8700, optical communication is caused between each of the third configuration transfer ONU sets and their respective second exchange apparatuses at step s8800.

Step s8200 must precede step s8800. Step 8400 must occur after step 7800 has commenced. Step s8800 must follow step s8700. Steps s8500, s8600 and s8700 must all follow step s8400. Otherwise, the steps of the method 8000 can be performed in any order in relation to one another, in series, or partially or wholly in parallel.

If step s8500 of ceasing the optical communication precedes step s8600 of powering down the one or more first exchange apparatuses, then step s8500 can trigger queueing of messages received at the exchange for the third configuration transfer ONU sets until the optical network has been switched to the third configuration. In this way, packet loss during the switch can be reduced or prevented.

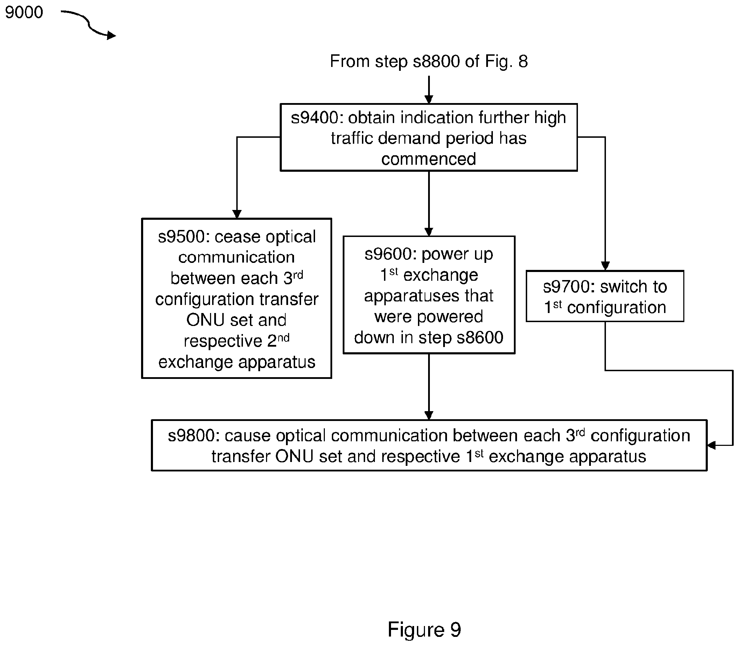

Figure 9 is a flowchart of an example method 9000 which can follow the method 8000 of Figure 8. At step s9400, an indication that a further period of high traffic demand on the optical network 5000 has commenced is obtained. (This can comprise making a determination, or receiving an indication, based on one or more criteria as described above in relation to step s7400 of Figure 7.) Several steps are performed in response to step s9400, as follows.
- At step s9500, the optical communication between each of the third configuration transfer ONU sets and their respective second exchange apparatuses is ceased.
- At step s9600, the one or more first exchange apparatuses that were powered down in step s8600 are powered up.
- At step s9700, the optical network is switched back to the first configuration.
- In response to step s9700, optical communication is caused between each of the third configuration transfer ONU sets and their respective first exchange apparatuses at step s9800.

Step s9800 must follow steps s9600 and s9700. Steps s9500, s9600 and s9700 must all follow step s9400. Otherwise, the steps of the method 9000 can be performed in any order in relation to one another, in series, or partially or wholly in parallel.

If step s9500 of ceasing the optical communication precedes step s9600 of powering up the one or more first exchange apparatuses, then step s9500 can trigger queueing of messages received at the exchange for the third configuration transfer ONU sets until the optical network has been switched back to the first configuration. In this way, packet loss during the switch can be reduced or prevented.

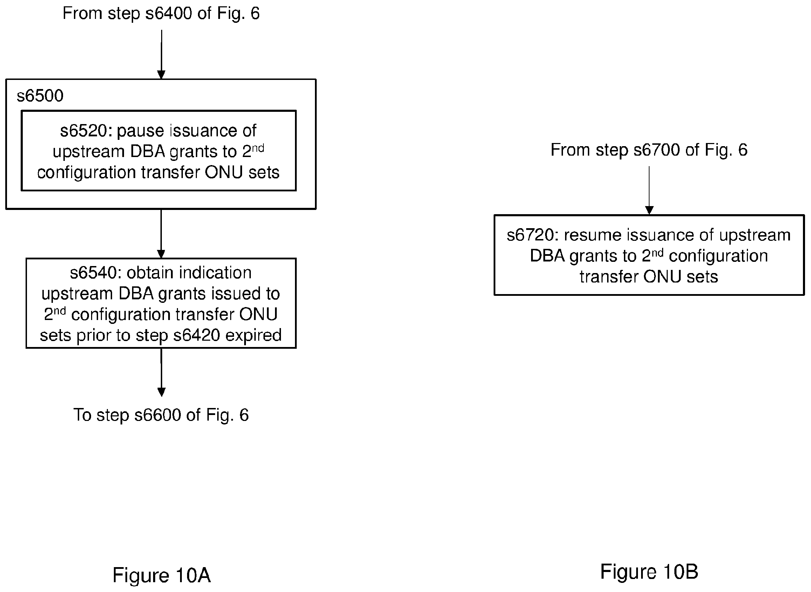

Figures 10A and 10B illustrate steps which can be incorporated into the method 6000 of Figure 6 in an example implementation. As shown in Figure 10A, the step s6500 of ceasing the optical communication between each of the second configuration transfer ONU sets and their respective first exchange apparatuses comprises pausing issuance of upstream dynamic bandwidth allocation (DBA) grants to the second configuration transfer ONU sets at step s6520. Subsequently, at step s6540, an indication that all upstream DBA grants issued to the second configuration transfer ONU sets prior to said pausing have expired is obtained. Step s6600 of powering down the one or more first exchange apparatuses of the second configuration transfer ONU sets is then performed in response to step s6540. As shown in Figure 10B, in response to switching the optical network to the second configuration at step s6700, issuance of upstream DBA grants to the second configuration transfer ONU sets is resumed at step s6720.

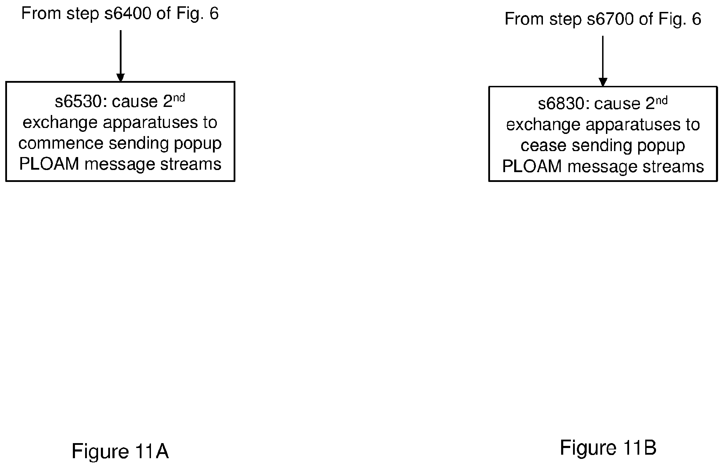

Figures 11A and 11B illustrate steps which can be incorporated into the method 6000 of Figure 6 in an example implementation. According to this implementation, the second configuration transfer ONU sets are configured to enter a popup state on detecting loss of signal from their respective first exchange apparatuses. As shown in Figure 11A, in response to obtaining the indication that the period of low traffic demand on the optical network has commenced at step s6400, the one or more second exchange apparatuses are caused to commence sending respective streams of popup physical layer operations, administration and maintenance, 'PLOAM', messages at step s6530. As shown in Figure 11B, in response to the optical network being switched to the second configuration at step s6700, the second exchange apparatuses are caused to cease sending their streams of popup PLOAM messages at step s6830.

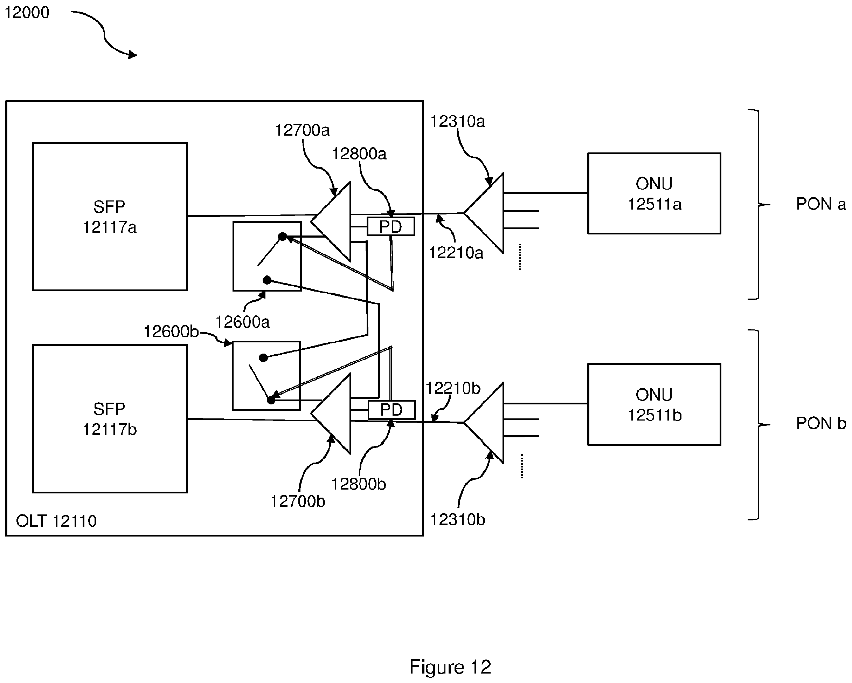

Figure 12 schematically illustrates an alternative example network topology 12000 similar to network 4000 of Figure 4, wherein reference numerals of corresponding components are incremented by 8000. In this example, the OLT ports 12117 are provided by SFPs, which are the 'exchange apparatuses' in the sense of the methods described above. An additional splitter 12700a is connected between the SFP 12117a and the spine fibre 12210a. A photodiode (PD) 12800a is fed by the additional splitter 12700a. The PD 12800a is used to detect the SFP 12117a being turned off and drive a single-way switch 12600a to switch the network 12000 to the second configuration. There is therefore no need for an interface to directly control the switch 12600a. The additional splitter 12700a also provides a connection to a single-way switch 12600b which mirrors the single-way switch 12600a on PON b. The PD 12800a is mirrored on PON b by a PD 12800b for controlling the single-way switch 12600b. The SFPs 12117a, 12117b, the switches 12600a, 12600b, the additional splitters 12700a, 12700b and the PDs 12800a, 12800b are all comprised in an OLT 12110. With the single-way optical switch 12600a closed the splitter 12310a is connected, through the additional splitters 12700a and 12700b, to the SFP 12117b. In this way the sets of ONUs served by both the splitter 12310a and the splitter 12310b, including the ONU 12511a and the ONU 12511b, are all served by the SFP 12117b once the SFP 12117a is powered down. Thus the optical network 12000 is shown in a first configuration, can be switched to a second configuration by powering down the SFP 12117a (in order to trigger closing of the single-way switch 12600a), can be switched back to the first configuration by powering up the SFP 12117a (in order to trigger opening of the single-way switch 12600a), then can be set in a third configuration by powering down the SFP 12117b (in order to trigger closing of the single-way switch 12600b) and can be subsequently switched back to the first configuration by powering up the SFP 12117b (in order to trigger opening of the single-way switch 12600b).

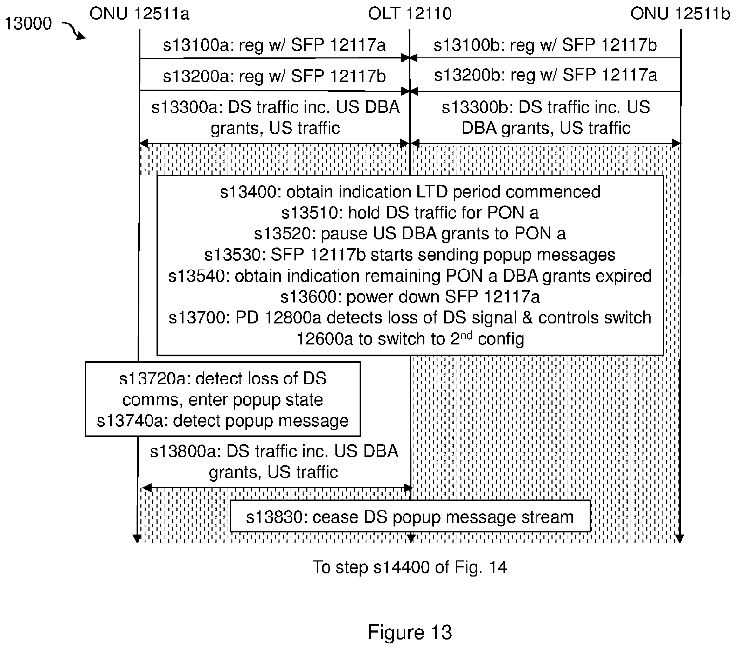

Figures 13 to 16 illustrate methods which can be implemented in the network 12000 of Figure 12 in which some aspects of existing PON protection management techniques are employed to minimise the changes needed to implement the methods proposed herein in legacy networks, and to reduce the number of times ONUs are required to register.

Figure 13 covers a method 13000 comprising initial registration of ONUs, conventional communication with the network 12000 in the first configuration, switch to the second configuration and subsequent communication in the second configuration.

At step s13100a the ONU 12511a registers (reg) with (w/) the SFP 12117a of the OLT 12110 and at step s13100b the ONU 12511b registers with the SFP 12117b of the OLT 12110. Similarly, at step s13200a the ONU 12511a registers with the SFP 12117b of the OLT 12110 and at step s13200b the ONU 12511b registers with the SFP 12117a of the OLT 12110. At step s13300a bidirectional (upstream, US and downstream, DS) communication between the ONU 12511a and the OLT 12110 (specifically, the SFP 12117a) begins, including upstream DBA grants issued in the downstream direction. Similarly, at step s13300b bidirectional communication between the ONU 12511a and the OLT 12110 (specifically, the SFP 12117b) begins, including upstream DBA grants issued in the downstream direction. These bidirectional communication paths remain active until an indication that a low traffic demand (LTD) period has commenced is obtained by the OLT 12110 at step s13400.

Several steps occur in response to step s13400. At step s13510, downstream traffic for PON a is held by the OLT 12110, which also pauses upstream DBA grants to PON a at step s13520. At step s13530 the SFP 12117b starts issuing a popup message stream. An indication is obtained by the OLT 12110 at step s13540 that the remaining PON a DBA grants have expired and in response to this, at step s13600 the SFP 12117a is powered down. The PD 12800a consequently detects loss of downstream signal and controls the switch 12600a to close in order to switch the network 12000 to the second configuration at step s13700.

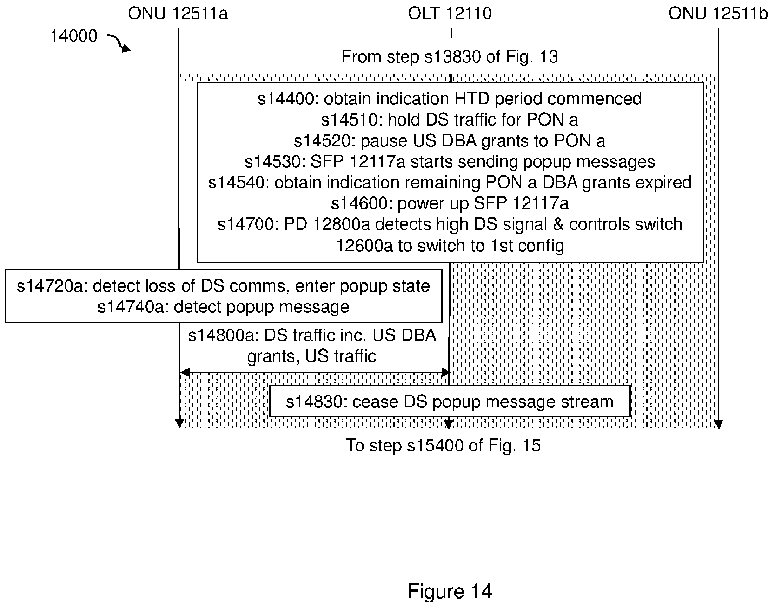

At step s13720a the ONU 12511a detects loss of downstream communication (comms) and enters popup state. This enables it to detect a popup message at step s13740a, which leads to bidirectional communication between the ONU 12511a and the OLT 12110 recommencing at step s13800a, this time through the SFP 12117b. The OLT 12110 can then cease its downstream popup message stream at step s13830. Thereafter, bidirectional communication between the SFP 12117b of the OLT 12110 and each of the ONUs 12511a and 12511b proceeds until the OLT 12110 obtains an indication that a high traffic demand (HTD) period has commenced, as shown at step s14400 of Figure 14.

Figure 14 illustrates a method 14000 which follows the method 13000 of Figure 13 and covers communication with the network 12000 in the second configuration, switch back to the first configuration and subsequent communication in the first configuration.

Several steps occur in response to step s14400. At step s14510, downstream traffic for PON a is held by the OLT 12110, which also pauses upstream DBA grants to PON a at step s14520. At step s14530 the SFP 12117a starts issuing a popup message stream. An indication is obtained by the OLT 12110 at step s14540 that the remaining PON a DBA grants have expired and in response to this, at step s14600 the SFP 12117a is powered up. The PD 12800a consequently detects the return of a high downstream signal and consequently controls the switch 12600a to open in order to switch the network 12000 back to the first configuration at step s14700.

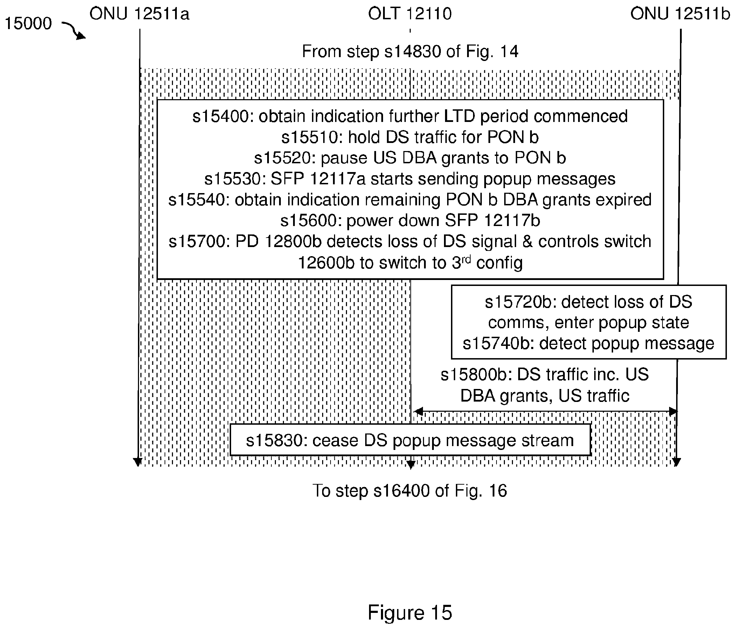

At step s14720a the ONU 12511a detects loss of downstream communication and enters popup state. This enables it to detect a popup message at step s14740a, which leads to bidirectional communication between the ONU 12511a and the OLT 12110 recommencing at step s14800a, this time through the SFP 12117a. The OLT 12110 can then cease its downstream popup message stream at step s14830. Thereafter, bidirectional communication between the OLT 12110 and each of the ONUs 12511a and 12511b proceeds until the OLT 12110 obtains an indication that a further low traffic demand period has commenced, as shown at step s15400 of Figure 15.

Figure 15 illustrates a method 15000 which follows the method 14000 of Figure 14 and covers communication with the network 12000 in the first configuration, switch to a third configuration and subsequent communication in the third configuration.

Several steps occur in response to step s15400. At step s15510, downstream traffic for PON b is held by the OLT 12110, which also pauses upstream DBA grants to PON b at step s15520. At step s15530 the SFP 12117a starts issuing a popup message stream. An indication is obtained by the OLT 12110 at step s15540 that the remaining PON b DBA grants have expired and in response to this, at step s15600 the SFP 12117b is powered down. The PD 12800b consequently detects loss of downstream signal and controls the switch 12600b to close in order to switch the network 12000 to the third configuration at step s15700.

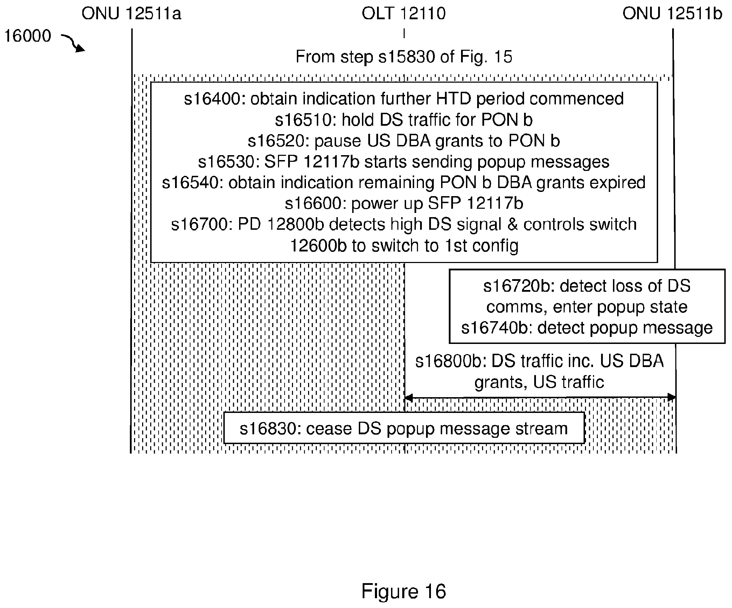

At step s15720b the ONU 12511b detects loss of downstream communication and enters popup state. This enables it to detect a popup message at step s15740b, which leads to bidirectional communication between the ONU 12511b and the OLT 12110 recommencing at step s15800b, this time through the SFP 12117a. The OLT 12110 can then cease its downstream popup message stream at step s15830. Thereafter, bidirectional communication between the SFP 12117a of the OLT 12110 and each of the ONUs 12511a and 12511b proceeds until the OLT 12110 obtains an indication that a further high traffic demand period has commenced, as shown at step s16400 of Figure 16.

Figure 16 illustrates a method 16000 which follows the method 15000 of Figure 15 and covers communication with the network 12000 in the third configuration, switch back to the first configuration and subsequent communication in the first configuration.

Several steps occur in response to step s16400. At step s16510, downstream traffic for PON b is held by the OLT 12110, which also pauses upstream DBA grants to PON b at step s16520. At step s16530 the SFP 12117b starts issuing a popup message stream. An indication is obtained by the OLT 12110 at step s16540 that the remaining PON b DBA grants have expired and in response to this, at step s16600 the SFP 12117b is powered up. The PD 12800b consequently detects the return of a high downstream signal and consequently controls the switch 12600b to open in order to switch the network 12000 back to the first configuration at step s16700.

At step s16720b the ONU 12511b detects loss of downstream communication and enters popup state. This enables it to detect a popup message at step s16740b, which leads to bidirectional communication between the ONU 12511b and the OLT 12110 recommencing at step s16800b, this time through the SFP 12117b. The OLT 12110 can then cease its downstream popup message stream at step s16830. Thereafter, bidirectional communication between the OLT 12110 and each of the ONUs 12511a and 12511b proceeds until the OLT 12110 obtains an indication that a yet further low traffic demand period has commenced. The methods 13000 to 16000 of Figures 13 to 16 can then continue ad infinitum.

### Suitable data processing system

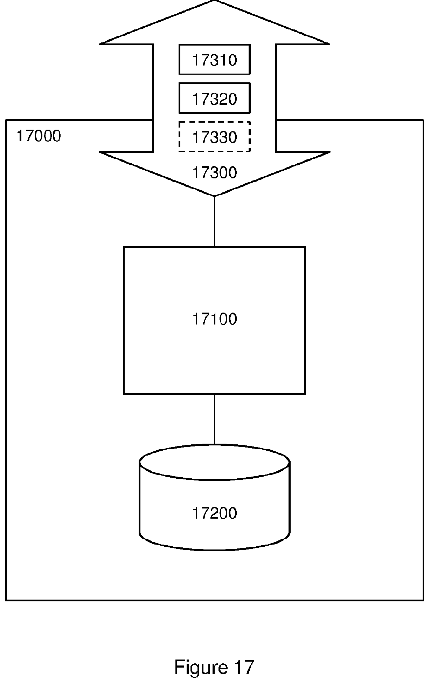

Figure 17 schematically illustrates an example data processing system 17000 capable of performing the methods described above. It comprises a processor 17100 operably coupled to both a memory 17200 and an interface 17300.

The interface 17300 comprises a receiver 17310 configured to receive messages. It can comprise one or more wireless receiver modules and/or one or more wired receiver modules. The interface 17300 further comprises a transmitter 17320 configured to transmit messages. The transmitter 17320 can comprise one or more wireless transmitter modules and/or one or more wired transmitter modules.

The memory 17200 can optionally comprise computer program instructions which, when the program is executed by the processor 17100, cause the data processing system 17000 to carry out one or more of the methods described above. Alternatively or additionally, the interface 17300 can optionally comprise a physical interface 17330 configured to receive a data carrier having such instructions stored thereon. Alternatively or additionally, the receiver 17310 can be configured to receive a data carrier signal carrying such instructions.

Embodiments of the invention will be apparent to those skilled in the art from consideration of the specification. It is intended that the specification be considered as exemplary only.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The scope of the present invention is defined by the appended claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

## Claims

1. A method (6000) of operating an optical network (5000) comprising a plurality of sets (5100) of optical network units, 'ONUs', and a commensurate plurality of exchange apparatuses (5200), the optical network being reversibly switchable between:
a first configuration in which each of the sets of ONUs is optically coupled to a respective first exchange apparatus of the plurality of exchange apparatuses, such that each of the exchange apparatuses is optically coupled to only one of the sets of ONUs; and
a second configuration in which one or some of the sets of ONUs, hereafter 'the second configuration transfer ONU sets', are optically uncoupled from their respective first exchange apparatuses and optically coupled to a respective second exchange apparatus of the plurality of exchange apparatuses, such that those second one or more exchange apparatuses are each optically coupled to two or more of the sets of ONUs;
the method comprising:
registering (s6100) each of the sets of ONUs with their respective first exchange apparatuses;
registering (s6200) each of the second configuration transfer ONU sets with their respective second exchange apparatuses; and
with the optical network in the first configuration, causing (s6300) optical communication between each of the sets of ONUs and their respective first exchange apparatuses;
the method being **characterised by** then:
obtaining (s6400) an indication that a period of low traffic demand on the optical network has commenced by determining, or receiving an indication, that a threshold proportion of ONUs of either
i) the second configuration transfer ONU sets; or
ii) the one or more sets of ONUs whose respective first exchange apparatuses act as respective second exchange apparatuses for the second configuration transfer ONU sets;
are inactive, or have been inactive for a threshold inactivity duration, or have been optically decoupled from their respective first exchange apparatuses; and
responsive thereto:
ceasing (s6500) the optical communication between each of the second configuration transfer ONU sets and their respective first exchange apparatuses;
powering down (s6600) those one or more first exchange apparatuses;
switching (s6700) the optical network to the second configuration; and
responsive thereto, causing (s6800) optical communication between each of the second configuration transfer ONU sets and their respective second exchange apparatuses.

2. The method of claim 1, wherein the step of obtaining the indication that a period of low traffic demand on the optical network has commenced further comprises one or more of:
a. determining, or receiving an indication, that a predetermined time window has commenced; and
b. determining, or receiving an indication, that traffic on the optical network has fallen below a threshold traffic level, or has remained below a threshold traffic level for a threshold quiet duration.

3. The method of claim 2, wherein the step of obtaining the indication that a period of low traffic demand on the optical network has commenced comprises option a., the method further comprising a step of:
prior to obtaining the indication that the period of low traffic demand on the optical network has commenced, determining the predetermined time window based on historical traffic data for the optical network and/or one or more other, comparable, networks.

4. The method of claim 3, further comprising updating the predetermined time window for future use, based on newly obtained traffic data.

5. The method of any preceding claim, wherein the step of ceasing the optical communication precedes the step of powering down the one or more first exchange apparatuses, the method further comprising, in response to ceasing the optical communication:
queuing messages received at the exchange for the second configuration transfer ONU sets until the optical network has been switched to the second configuration.

6. The method of any preceding claim, wherein:
the step of ceasing the optical communication between each of the second configuration transfer ONU sets and their respective first exchange apparatuses comprises pausing (s6520) issuance of upstream dynamic bandwidth allocation, 'DBA', grants to the second configuration transfer ONU sets; and
the method further comprises:
obtaining (s6540) an indication that all upstream DBA grants issued to the second configuration transfer ONU sets prior to said pausing have expired, the step of powering down the one or more first exchange apparatuses of the second configuration transfer ONU sets being responsive thereto; and
in response to switching the optical network to the second configuration, resuming (s6720) issuance of upstream DBA grants to the second configuration transfer ONU sets.

7. The method of any preceding claim, wherein the second configuration transfer ONU sets are configured to enter a popup state on detecting loss of communication from their respective first exchange apparatuses, the method further comprising:
in response to obtaining the indication that the period of low traffic demand on the optical network has commenced, causing (s6530) the one or more second exchange apparatuses to commence sending respective streams of popup physical layer operations, administration and maintenance, 'PLOAM', messages; and
in response to switching the optical network to the second configuration, causing (s6830) the one or more second exchange apparatuses to cease sending the stream of popup PLOAM messages.

8. The method of any preceding claim, further comprising, subsequently:
obtaining (s7400) an indication that a period of high traffic demand on the optical network has commenced; and
responsive thereto:
ceasing (s7500) the optical communication between each of the second configuration transfer ONU sets and their respective second exchange apparatuses;
powering up (s7600) the one or more first exchange apparatuses that were powered down in response to obtaining the indication that the period of low traffic demand on the optical network had commenced;
switching (s7700) the optical network back to the first configuration; and
causing (s7800) optical communication between each of the second configuration transfer ONU sets and its respective first exchange apparatus to recommence.

9. The method of claim 8, wherein the optical network is further reversibly switchable between the first configuration and a third configuration in which one or more of the plurality of sets of ONUs which are not second configuration transfer ONU sets, hereafter 'third configuration transfer ONU sets', are optically uncoupled from their respective first exchange apparatuses and optically coupled to a respective second exchange apparatus of the plurality of exchange apparatuses, such that those second one or more exchange apparatuses are each optically coupled to two or more of the sets of ONUs, the method further comprising:
registering (s8200) each of the third configuration transfer ONU sets with their respective second exchange apparatuses; and
subsequent to causing optical communication between each of the second configuration transfer ONU sets and its respective first exchange apparatus to recommence:
obtaining (s8400) an indication that a further period of low traffic demand on the optical network has commenced; and
responsive thereto:
ceasing (s8500) the optical communication between each of the third configuration transfer ONU sets and their respective first exchange apparatuses;
powering down (s8600) those one or more first exchange apparatuses;
switching (s8700) the optical network to the third configuration; and
responsive thereto, causing (s8800) optical communication between each of the third configuration transfer ONU sets and their respective second exchange apparatuses.

10. The method of any preceding claim, wherein the network comprises a computer (17000) comprising a processor (17100) operably coupled to both a memory (17200) and an interface (17300), the interface comprising a transmitter (17320) that transmits messages, and a receiver (17310) that receives messages, to implement the steps of the method.

11. A data processing system (17000), comprising the computer of claim 10.

12. A computer program comprising instructions which, when the program is executed by the computer of claim 10, cause the computer to carry out the method of claim 10.

13. A computer-readable data carrier having stored thereon the computer program of claim 12.

14. A data carrier signal carrying the computer program of claim 12.

## Patentansprüche

1. Verfahren (6000) zum Betreiben eines optischen Netzwerks (5000), umfassend eine Vielzahl von Gruppen (5100) von optischen Netzwerkeinheiten (Optical Network Units, ONUs) und eine entsprechende Vielzahl von Vermittlungsvorrichtungen (5200), wobei das optische Netzwerk reversibel umschaltbar ist zwischen:
einer ersten Konfiguration, in der jede der Gruppen von ONUs mit einer jeweiligen ersten Vermittlungsvorrichtung der Vielzahl von Vermittlungsvorrichtungen optisch gekoppelt ist, sodass jede der Vermittlungsvorrichtungen mit genau einer der Gruppen von ONUs optisch gekoppelt ist; und
einer zweiten Konfiguration, in der eine oder mehrere der Gruppen von ONUs, nachfolgend "die zweiten Konfigurationsübertragungs-ONU-Gruppen", von ihren jeweiligen ersten Vermittlungsvorrichtungen optisch entkoppelt sind und mit einer jeweiligen zweiten Vermittlungsvorrichtung der Vielzahl von Vermittlungsvorrichtungen optisch gekoppelt sind, sodass diese eine oder mehreren zweiten Vermittlungsvorrichtungen jeweils mit zwei oder mehr der Gruppen von ONUs optisch gekoppelt sind;
das Verfahren umfassend:
Registrieren (s6100) jeder der Gruppen von ONUs bei ihren jeweiligen ersten Vermittlungsvorrichtungen;
Registrieren (s6200) jeder der zweiten Konfigurationsübertragungs-ONU-Gruppen bei ihren jeweiligen zweiten Vermittlungsvorrichtungen; und
bei dem optischen Netzwerk in der ersten Konfiguration, Veranlassen (s6300) optischer Kommunikation zwischen jeder der Gruppen von ONUs und ihren jeweiligen ersten Vermittlungsvorrichtungen;
wobei das Verfahren ferner durch Folgendes gekennzeichnet ist:
Erhalten (s6400) einer Anzeige, dass ein Zeitraum geringer Verkehrsnachfrage im optischen Netzwerk begonnen hat, durch Bestimmen oder Empfangen einer Anzeige, dass ein Schwellenanteil von ONUs entweder
i) der zweiten Konfigurationsübertragungs-ONU-Gruppen; oder
ii) der einen oder mehreren Gruppen von ONUs, deren jeweilige erste Vermittlungsvorrichtungen als jeweilige zweite Vermittlungsvorrichtungen für die zweiten Konfigurationsübertragungs-ONU-Gruppen fungieren;
inaktiv sind oder für eine Schwellen-Inaktivitätsdauer inaktiv gewesen sind oder von ihren jeweiligen ersten Vermittlungsvorrichtungen optisch entkoppelt sind; und
als Reaktion darauf:
Beenden (s6500) der optischen Kommunikation zwischen jeder der zweiten Konfigurationsübertragungs-ONU-Gruppen und ihren jeweiligen ersten Vermittlungsvorrichtungen;
Abschalten (s6600) jener einen oder mehreren ersten Vermittlungsvorrichtungen;
Umschalten (s6700) des optischen Netzwerks zur zweiten Konfiguration; und
als Reaktion darauf Veranlassen (s6800) optischer Kommunikation zwischen jeder der zweiten Konfigurationsübertragungs-ONU-Gruppen und ihren jeweiligen zweiten Vermittlungsvorrichtungen.

2. Verfahren nach Anspruch 1, wobei der Schritt des Erhaltens der Anzeige, dass ein Zeitraum geringer Verkehrsnachfrage im optischen Netzwerk begonnen hat, ferner eines oder mehrere der Folgenden umfasst:
a. Bestimmen oder Empfangen einer Anzeige, dass ein vorbestimmtes Zeitfenster begonnen hat; und
b. Bestimmen oder Empfangen einer Anzeige, dass der Verkehr im optischen Netzwerk unter ein Schwellenverkehrsniveau gefallen ist oder für eine Schwellenruhezeit unter einem Schwellenverkehrsniveau geblieben ist.

3. Verfahren nach Anspruch 2, wobei der Schritt des Ermittelns der Anzeige, dass ein Zeitraum geringer Verkehrsnachfrage im optischen Netzwerk begonnen hat, die Option a. umfasst, wobei das Verfahren ferner einen folgenden Schritt umfasst:
vor dem Ermitteln der Anzeige, dass der Zeitraum geringer Verkehrsnachfrage im optischen Netzwerk begonnen hat, Bestimmen des vorbestimmten Zeitfensters basierend auf historischen Verkehrsdaten für das optische Netzwerk und/oder ein oder mehrere andere vergleichbare Netzwerke.

4. Verfahren nach Anspruch 3, ferner umfassend das Aktualisieren des vorbestimmten Zeitfensters zur zukünftigen Verwendung basierend auf neu erhaltenen Verkehrsdaten.

5. Verfahren nach einem der vorhergehenden Ansprüche, wobei der Schritt des Beendens der optischen Kommunikation dem Schritt des Abschaltens der einen oder mehreren ersten Vermittlungsvorrichtungen vorausgeht, wobei das Verfahren ferner als Reaktion auf das Beenden der optischen Kommunikation umfasst:
Einstellen von bei der Vermittlungsvorrichtung für die zweiten Konfigurationsübertragungs-ONU-Gruppen empfangenen Nachrichten in eine Warteschlange, bis das optische Netzwerk zur zweiten Konfiguration umgeschaltet worden ist.

6. Verfahren nach einem der vorhergehenden Ansprüche, wobei:
der Schritt des Beendens der optischen Kommunikation zwischen jeder der zweiten Konfigurationsübertragungs-ONU-Gruppen und ihren jeweiligen ersten Vermittlungsvorrichtungen ein Pausieren (s6520) der Ausgabe von Upstream-Zuweisungen der dynamischen Bandbreitenzuweisung (Dynamic Bandwidth Allocation, DBA) an die zweiten Konfigurationsübertragungs-ONU-Gruppen umfasst; und
das Verfahren ferner umfasst:
Erhalten (s6540) einer Anzeige, dass alle vor dem Pausieren an die zweiten Konfigurationsübertragungs-ONU-Gruppen ausgegebenen Upstream-DBA-Zuweisungen abgelaufen sind, wobei der Schritt des Abschaltens der einen oder mehreren ersten Vermittlungsvorrichtungen der zweiten Konfigurationsübertragungs-ONU-Gruppen als Reaktion darauf erfolgt; und
als Reaktion auf das Umschalten des optischen Netzwerks zur zweiten Konfiguration, Fortsetzen (s6720) der Ausgabe von Upstream-DBA-Zuweisungen an die zweiten Konfigurationsübertragungs-ONU-Gruppen.

7. Verfahren nach einem der vorhergehenden Ansprüche, wobei die zweiten Konfigurationsübertragungs-ONU-Gruppen dazu konfiguriert sind, beim Erkennen eines Kommunikationsverlusts von ihren jeweiligen ersten Vermittlungsvorrichtungen in einen Popup-Zustand überzugehen, wobei das Verfahren ferner umfasst:
als Reaktion auf das Ermitteln der Anzeige, dass der Zeitraum geringer Verkehrsnachfrage im optischen Netzwerk begonnen hat, Veranlassen (s6530), dass die eine oder mehreren zweiten Vermittlungsvorrichtungen beginnen, jeweilige Ströme von Popup-Nachrichten für Betrieb, Administration und Wartung der physikalischen Schicht (Physical Layer Operations, Administration and Maintenance, PLOAM) zu senden; und
als Reaktion auf das Umschalten des optischen Netzwerks in die zweite Konfiguration, Veranlassen (s6830), dass die eine oder mehreren zweiten Vermittlungsvorrichtungen das Senden der Ströme von Popup-PLOAM-Nachrichten beenden.

8. Verfahren nach einem der vorhergehenden Ansprüche, anschließend ferner umfassend: Erhalten (s7400) einer Anzeige, dass ein Zeitraum hoher Verkehrsnachfrage im optischen Netzwerk begonnen hat; und
als Reaktion darauf:
Beenden (s7500) der optischen Kommunikation zwischen jeder der zweiten Konfigurationsübertragungs-ONU-Gruppen und ihren jeweiligen ersten Vermittlungsvorrichtungen;
Einschalten (s7600) der einen oder mehreren ersten Vermittlungsvorrichtungen, die als Reaktion auf das Ermitteln der Anzeige, dass der Zeitraum geringer Verkehrsnachfrage im optischen Netzwerk begonnen hatte, abgeschaltet worden sind;
Umschalten (s7700) des optischen Netzwerks zurück zur ersten Konfiguration; und
Veranlassen (s7800), dass die optische Kommunikation zwischen jeder der zweiten Konfigurationsübertragungs-ONU-Gruppen und ihrer jeweiligen ersten Vermittlungsvorrichtung wieder aufgenommen wird.

9. Verfahren nach Anspruch 8, wobei das optische Netzwerk ferner reversibel zwischen der ersten Konfiguration und einer dritten Konfiguration umschaltbar ist, in der eine oder mehrere der Vielzahl von Gruppen von ONUs, die keine zweiten Konfigurationsübertragungs-ONU-Gruppen sind, nachfolgend "die dritten Konfigurationsübertragungs-ONU-Gruppen", von ihren jeweiligen ersten Vermittlungsvorrichtungen optisch entkoppelt sind und mit einer jeweiligen zweiten Vermittlungsvorrichtung der Vielzahl von Vermittlungsvorrichtungen optisch gekoppelt sind, sodass diese eine oder mehreren zweiten Vermittlungsvorrichtungen jeweils mit zwei oder mehr der Gruppen von ONUs optisch gekoppelt sind, das Verfahren ferner umfassend:
Registrieren (s8200) jeder der dritten Konfigurationsübertragungs-ONU-Gruppen bei ihren jeweiligen zweiten Vermittlungsvorrichtungen; und
nach dem Veranlassen, dass die optische Kommunikation zwischen jeder der zweiten Konfigurationsübertragungs-ONU-Gruppen und ihrer jeweiligen ersten Vermittlungsvorrichtung wieder aufgenommen wird:
Erhalten (s8400) einer Anzeige, dass ein weiterer Zeitraum geringer Verkehrsnachfrage im optischen Netzwerk begonnen hat; und
als Reaktion darauf:
Beenden (s8500) der optischen Kommunikation zwischen jeder der dritten Konfigurationsübertragungs-ONU-Gruppen und ihren jeweiligen ersten Vermittlungsvorrichtungen;
Abschalten (s8600) jener einen oder mehreren ersten Vermittlungsvorrichtungen;
Umschalten (s8700) des optischen Netzwerks zur dritten Konfiguration; und
als Reaktion darauf Veranlassen (s8800) optischer Kommunikation zwischen jeder der dritten Konfigurationsübertragungs-ONU-Gruppen und ihren jeweiligen zweiten Vermittlungsvorrichtungen.

10. Verfahren nach einem der vorhergehenden Ansprüche, wobei das Netzwerk einen Computer (17000) umfasst, der einen Prozessor (17100) aufweist, der betriebsfähig sowohl mit einem Speicher (17200) als auch mit einer Schnittstelle (17300) gekoppelt ist, wobei die Schnittstelle einen Sender (17320), der Nachrichten sendet, und einen Empfänger (17310), der Nachrichten empfängt, umfasst, um die Schritte des Verfahrens auszuführen.

11. Datenverarbeitungssystem (17000), umfassend den Computer nach Anspruch 10.

12. Computerprogramm, umfassend Anweisungen, die, wenn das Programm von dem Computer nach Anspruch 10 ausgeführt wird, den Computer veranlassen, das Verfahren nach Anspruch 10 durchzuführen.

13. Computerlesbarer Datenträger, auf dem das Computerprogramm nach Anspruch 12 gespeichert ist.

14. Datenträgersignal, das das Computerprogramm nach Anspruch 12 trägt.

## Revendications

1. Procédé (6000) d'exploitation d'un réseau optique (5000) comprenant une pluralité d'ensembles (5100) d'unités de réseau optique, « ONU », et une pluralité correspondante d'appareils d'échange (5200), le réseau optique étant commutable de manière réversible entre :
une première configuration dans laquelle chacun des ensembles d'unités ONU est optiquement couplé à un premier appareil d'échange respectif de la pluralité d'appareils d'échange, de sorte que chacun des appareils d'échange soit optiquement couplé à un seul des ensembles d'unités ONU ; et
une deuxième configuration dans laquelle un ou certains des ensembles de l'unité ONU, ci-après « les deuxièmes ensembles de transfert de configuration ONU », sont découplés optiquement de leurs premiers appareils d'échange respectifs et couplés optiquement à un deuxième appareil d'échange respectif de la pluralité d'appareils d'échange, de telle sorte que ces deuxièmes un ou certains appareils d'échange soient chacun couplés optiquement à deux ou plusieurs des ensembles d'ONU ;
le procédé comprenant les étapes suivantes :
enregistrer (s6100) chacun des ensembles d'ONU auprès de leurs premiers appareils d'échange respectifs ;
enregistrer (s6200) chacun des deuxièmes ensembles d'ONU de transfert de configuration avec leurs deuxièmes appareils d'échange respectifs ; et
avec le réseau optique dans la première configuration, provoquer (s6300) une communication optique entre chacun des ensembles d'ONU et leurs premiers appareils d'échange respectifs ;
le procédé étant **caractérisé par**, ensuite :
l'obtention (s6400) d'une indication qu'une période de faible demande de trafic sur le réseau optique a commencé par la détermination, ou la réception d'une indication, qu'une proportion de seuil de la charge de l'ONU de soit
i) les deuxièmes ensembles d'ONU de transfert de configuration ; soit
ii) les un ou plusieurs ensembles d'ONU dont les premiers appareils d'échange respectifs agissent comme des deuxièmes appareils d'échange respectifs pour les deuxièmes ensembles d'ONU de transfert de configuration ; est inactive, ou a été inactive pendant une durée d'inactivité seuil, ou a été découplée optiquement de ses premiers appareils d'échange respectifs ; et
en réponse à cela :
l'arrêt (s6500) de la communication optique entre chacun des deuxièmes ensembles d'ONU de transfert de configuration et leurs premiers appareils d'échange respectifs ;
la mise hors tension (s6600) des un ou plusieurs premiers appareils d'échange ;
la commutation (s6700) du réseau optique vers la deuxième configuration ; et
en réponse à cela, la provocation (s6800) d'une communication optique entre chacun des deuxièmes ensembles d'ONU de transfert de configuration et leurs deuxièmes appareils d'échange respectifs.

2. Procédé selon la revendication 1, dans lequel l'étape d'obtention de l'indication qu'une période de faible demande de trafic sur le réseau optique a commencé comprend en outre un ou plusieurs des points suivants :
a. déterminer, ou recevoir une indication, qu'une fenêtre temporelle prédéterminée a commencé ; et
b. déterminer, ou recevoir une indication, que le trafic sur le réseau optique est tombé en dessous d'un niveau de trafic seuil, ou est resté en dessous d'un niveau de trafic seuil pendant une durée de silence seuil.

3. Procédé selon la revendication 2, dans lequel l'étape d'obtention de l'indication qu'une période de faible demande de trafic sur le réseau optique a commencé comprend l'option a., le procédé comprenant en outre l'étape suivante :
avant d'obtenir l'indication que la période de faible demande de trafic sur le réseau optique a commencé, déterminer la fenêtre temporelle prédéterminée sur la base de données historiques de trafic pour le réseau optique et/ou un ou plusieurs autres réseaux comparables.

4. Procédé selon la revendication 3, comprenant en outre la mise à jour de la fenêtre temporelle prédéterminée pour une utilisation future, sur la base de données de trafic nouvellement obtenues.

5. Procédé selon l'une quelconque des revendications précédentes, dans lequel l'étape d'arrêt de la communication optique précède l'étape de mise hors tension des un ou plusieurs premiers appareils d'échange, le procédé comprenant en outre, en réponse à l'arrêt de la communication optique :
la mise en file d'attente des messages reçus au niveau du central pour les deuxièmes ensembles d'ONU de transfert de configuration jusqu'à ce que le réseau optique ait été commuté dans la deuxième configuration.

6. Procédé selon l'une quelconque des revendications précédentes, dans lequel :
l'étape d'arrêt de la communication optique entre chacun des deuxièmes ensembles d'ONU de transfert de configuration et leurs premiers appareils d'échange respectifs comprend la mise en pause (s6520) de l'attribution d'octrois de bande passante dynamique amont « DBA » aux deuxièmes ensembles d'ONU de transfert de configuration ; et
le procédé comprenant en outre les étapes suivantes :
obtenir (s6540) une indication que tous les octrois de DBA amont délivrés aux deuxièmes ensembles d'ONU de transfert de configuration avant ladite pause ont expiré, l'étape de mise hors tension des un ou plusieurs premiers appareils d'échange des deuxièmes ensembles d'ONU de transfert de configuration y répondant ; et
en réponse à la commutation du réseau optique vers la deuxième configuration, reprendre (s6720) la délivrance d'octrois de DBA amont aux deuxièmes ensembles d'ONU de transfert de configuration.

7. Procédé selon l'une quelconque des revendications précédentes, dans lequel les deuxièmes ensembles d'ONU de transfert de configuration sont configurés pour entrer dans un état contextuel lors de la détection d'une perte de communication à partir de leurs premiers appareils d'échange respectifs, le procédé comprenant en outre les étapes suivantes :
en réponse à l'obtention de l'indication que la période de faible demande de trafic sur le réseau optique a commencé, amener (s6530) les un ou plusieurs deuxièmes appareils d'échange à commencer à envoyer des flux respectifs de messages PLOAM (physical layer operations, administration and maintenance) ponctuels ; et
en réponse à la commutation du réseau optique vers la deuxième configuration, amener (s6830) les un ou plusieurs deuxièmes appareils d'échange à cesser d'envoyer le flux de messages PLOAM ponctuels.

8. Procédé selon l'une quelconque des revendications précédentes, comprenant en outre, ultérieurement, l'étape suivante : obtenir (s7400) une indication qu'une période de forte demande de trafic sur le réseau optique a commencé ; et
en réponse à cela :
arrêter (s7500) la communication optique entre chacun des deuxièmes ensembles d'ONU de transfert de configuration et leurs deuxièmes appareils d'échange respectifs ;
mettre sous tension (s7600) les un ou plusieurs premiers appareils d'échange qui ont été mis hors tension en réponse à l'obtention de l'indication que la période de faible demande de trafic sur le réseau optique avait commencé ;
faire repasser (s7700) le réseau optique dans la première configuration ; et
amener (s7800) la reprise d'une communication optique entre chacun des deuxièmes ensembles d'ONU de transfert de configuration et leur premier appareil d'échange respectif.

9. Procédé selon la revendication 8, dans lequel le réseau optique est en outre commutable de façon réversible entre la première configuration et une troisième configuration dans laquelle un ou plusieurs ensembles de la pluralité d'ensembles d'ONU qui ne sont pas des deuxièmes ensembles d'ONU de transfert de configuration, ci-après « troisièmes ensembles d'ONU de transfert de configuration », sont découplés optiquement de leurs premiers appareils d'échange respectifs et couplés optiquement à un deuxième appareil d'échange respectif de la pluralité d'appareils d'échange, de sorte que ces deuxième un ou plusieurs appareils d'échange soient chacun optiquement couplés à deux, ou davantage, des ensembles d'ONU, le procédé comprenant en outre les étapes suivantes :
enregistrer (s8200) chacun des troisièmes ensembles d'ONU de transfert de configuration avec leurs deuxièmes appareils d'échange respectifs ; et
après avoir amené la reprise de la communication optique entre chacun des deuxièmes ensembles d'ONU de transfert de configuration et leur premier appareil d'échange respectif :
obtenir (s8400) une indication qu'une autre période de faible demande de trafic sur le réseau optique a commencé ; et
en réponse à cela :
arrêter (s8500) la communication optique entre chacun des troisièmes ensembles d'ONU de transfert de configuration et leurs premiers appareils d'échange respectifs ;
mettre hors tension (s8600) ces un ou plusieurs premiers appareils d'échange ;
faire passer (s8700) le réseau optique dans la troisième configuration ; et
en réponse à cela, provoquer (s8800) une communication optique entre chacun des troisièmes ensembles d'ONU de transfert de configuration et leurs deuxièmes appareils d'échange respectifs.

10. Procédé selon l'une quelconque des revendications précédentes, dans lequel le réseau comprend un ordinateur (17000) comprenant un processeur (17100) couplé de manière fonctionnelle à, à la fois, une mémoire (17200) et une interface (17300), l'interface comprenant un émetteur (17320) qui transmet des messages, et un récepteur (17310) qui reçoit des messages, pour mettre en œuvre les étapes du procédé.

11. Système de traitement de données (17000), comprenant l'ordinateur selon la revendication 10.

12. Programme informatique comprenant des instructions qui, lorsque le programme est exécuté par l'ordinateur de la revendication 10, amènent l'ordinateur à mettre en œuvre le procédé selon la revendication 10.

13. Support de données lisible par ordinateur sur lequel est stocké le programme informatique selon la revendication 12.

14. Signal support de données acheminant le programme informatique selon la revendication 12.
